# EUROPÄISCHE PATENTSCHRIFT

(11) **EP 1 055 055 B1**
(45) Veröffentlichungstag und Bekanntmachung des Hinweises auf die Patenterteilung: **12.01.2005**
(21) Anmeldenummer: 99907498.2
(22) Anmeldetag: 04.02.1999
(51) Int. Cl.: F01N 3/28

(54) **VERFAHREN ZUM HERSTELLEN EINES WABENKÖRPERS MITTELS EINES HARTBLECHS**
METHOD FOR PRODUCING A HONEYCOMBED BODY USING A HARD SHEET METAL
PROCEDE POUR LA FABRICATION D'UN CORPS ALVEOLAIRE AU MOYEN D'UNE TOLE DURE

(30) Priorität: 11.02.1998 DE 19805563
(43) Veröffentlichungstag der Anmeldung: 29.11.2000
(73) Patentinhaber: Emitec Gesellschaft für Emissionstechnologie mbH, 53797 Lohmar (DE)
(72) Erfinder: WIERES, Ludwig, D-51491 Overath (DE)
(74) Vertreter: Kahlhöfer, Hermann, Dipl.-Phys.
(86) Internationale Anmeldenummer: PCT/EP1999/000732
(87) Internationale Veröffentlichungsnummer: WO 1999/041494

(56) Entgegenhaltungen:
- EP-A- 0 658 633
- EP-A- 0 713 725
- DE-A- 3 825 247
- DE-A- 4 418 630
- US-A- 5 645 803
- PATENT ABSTRACTS OF JAPAN vol. 014, no. 086 (C-0690), 19. Februar 1990 & JP 01 299645 A (NIPPON STEEL CORP;OTHERS: 02), 4. Dezember 1989

## Beschreibung

Der Gegenstand der Erfindung bezieht sich insbesondere auf ein Verfahren zum Herstellen eines Wabenkörpers, insbesondere für Abgaskatalysatoren.

Es ist bekannt, Wabenkörper durch Stapeln und/oder Wickeln von Blechlagen, von denen zumindest ein Teil strukturierte Blechlagen sind, auszubilden. Solche Wabenkörper werden beispielsweise als Trägerkörper für katalytisch wirkende Beschichtungen verwendet.

Zur Herstellung eines solchen Wabenkörpers wird wenigstens ein Blech verwendet, welches wenigstens teilweise strukturiert wird. In Abhängigkeit von der Struktur des Wabenkörpers wird das Blech oder Blechabschnitte gestapelt und/oder gewickelt. Unterschiedliche Ausbildungen eines Wabenkörpers als ein Katalysator-Trägerkörper sind beispielsweise in der EP-A 1-0 245 738 beschrieben.

Der Wabenkörper wird anschließend einer Belotung unterzogen. Danach findet ein Verlöten der Blechlagen untereinander statt. Das Verlöten der Blechlagen erfolgt insbesondere in einem Vakuumlötofen.

Es ist bekannt, daß derartige Wabenkörper aus Blechen hergestellt werden, die eine Dicke von ca. 110 µm aufweisen. Es ist bekannt, das Blech nach einem Kaltwalzvorgang einem Weichglühvorgang zu unterziehen, so daß dem Blech eine gewisse Elastizität verliehen wird, durch die sichergestellt wird, daß das Blech mit einer Struktur versehen werden kann, wobei das Blech keine Schädigung erfährt. Bei den Strukturen handelt es sich insbesondere um Wellungen, die über entsprechende Wellwalzen in das Blech eingebracht werden. Dadurch, daß das ) Blech einer Wärmebehandlung, dem Weichglühen, unterzogen wurde, werden auch die Formwerkzeuge nicht übermäßig beansprucht.

Es ist auch bekannt, daß metallische Wabenkörper aus Metallfolien mit einer Dicke von ca. 50 µm ausgebildet werden können (Stephan Pelters et al "The Development and Application of a Metal Supported Catalyst for Porsche's 911 Carrera 4" SAE Technical Paper Series 890488). Auch solche Bleche sind einem Weichglühvorgang unterzogen worden.

Weiter ist beispielsweise aus der DE-A-44 18 630 ein Herstellungsprozeß für einen Wabenkörper bekannt, bei dem strukturierte und glatte Bleche gestapelt und/oder verwunden werden. Mit dem Ziel eines besonders stabilen Wabenkörpers mit möglichst geringer Masse wird der Wabenkörper mit glatten Blechen aus gehärtetem Material und strukturierten, weichgeglühten Blechen hergestellt, die sich zudem in ihrer Blechdicke unterscheiden.

Einen besonders hochtemperaturfesten und korrosionsbeständigen Wabenkörper für katalytische Konverter schlägt die DE-A-38 25 247 vor. Als Grundelement dient eine Stahltafel mit spezifischer Zusammensetzung einschließlich der Elemente Chrom und Aluminium, welche mit Nickel dünn plattiert sind. Danach soll die Stahltafel durch Schmelztauchen mit Aluminium oder einer AluminiumLegierung plattiert werden. In Vorbereitung auf einen abschließenden Diffusionsvorgang wird die Aluminium-Schicht durch Kaltwalzen mit der Stahltafel in einen innigen Kontakt gebracht, wobei gleichzeitig Strukturen in dieses Schichtmetall eingebracht werden.

Hiervon ausgehend liegt der vorliegenden Erfindung die Aufgabe zugrunde, ein Verfahren zum Herstellen eines Wabenkörpers anzugeben, durch das der Aufwand für die Herstellung des Wabenkörpers verringert werden kann. Ein weiteres Ziel der Erfindung ist, ein Wabenkörper-Halbfabrikat anzugeben, welches einfacher herstellbar ist.

Diese Aufgaben und Ziele werden durch die Merkmale der jeweiligen unabhängigen Ansprüche gelöst, beziehungsweise erreicht. Vorteilhafte Weiterbildungen und. Ausgestaltungen sind jeweils Gegenstand der abhängigen Ansprüche.

In Abkehr von den bisher bekannten Verfahren zum Herstellen eines Wabenkörpers, insbesondere für Abgaskatalysatoren, wird vorgeschlagen, daß wenigstens ein Hartblech mit einer Dicke von höchstens 80 µm, ohne ein vorheriges Weichglühen wenigstens teilweise einer Kaltumformung zur Ausbildung einer Struktur unterzogen wird. Das wenigstens teilweise strukturierte Hartblech wird geschichtet und gewickelt oder gewickelt. Das Hartblech weist wenigstens einen der folgenden Parameter auf: eine Streckgrenze R_{p0,2}, die größer ist als 950 N/mm²; eine Zugfestigkeit Rₘ, die zwischen 900 und 1250 N/mm² liegt; eine Bruchdehnung bei ca. 1 %; eine Erichsontiefung bei ca. 1mm.

Überraschenderweise ist festgestellt worden, daß ein Hartblech mit einer Dicke von höchstens 80 µm zum einen so beschaffen ist, daß dieses eine Kaltumformung zur Ausbildung einer Struktur zuläßt, ohne daß das Hartblech durch die Kaltumformung zu stark mechanisch beansprucht wird und zum anderen ist auch festgestellt worden, daß bei einem solchen Hartblech während eines Wikelvorgangs die in das Hartblech eingebrachte Struktur im wesentlichen erhalten bleibt, was bei weichgeglühten Blechen geringer Dicke nicht sichergestellt war. Dies ist insbesondere bei der Verwendung von Wabenkörpern als Abgaskatalysatoren von besonderer Bedeutung, da bei Abgaskatalysatoren die Strömungskanäle, die der Wabenkörper aufweist, einen signifikanten Einfluß auf das Strömungsverhalten und damit auch auf das katalytische Verhalten des Abgaskatalysators haben.

Dadurch, daß der Wabenkörper aus einem Hartblech gebildet wird, das einem Kaltumformvorgang ohne ein vorheriges Weichglühen unterzogen wird, wird auch eine deutlich geringere Varianz in der Zelldichte erreicht. Dies ist darauf zurückzuführen, daß beim Wickelvorgang die Struktur des Hartblechs erhalten bleibt, was bei einem Blech, das vor dem Kaltumformvorgang einer Weichglühbehandlung unterzogen wurde, nicht der Fall ist. Ein weiterer Vorzug des erfindungsgemäßen Herstellungsverfahrens ist, daß ein Wabenkörper bereitgestellt wird, bei dem nach einem Lötvorgang, in dem die Hartbleche miteinander verbunden werden, eine höhere Lötqualität erreicht wird. Dadurch, daß das Hartblech eine relativ hohe Festigkeit aufweist, kann der geschichtete und gewickelte oder gewickelte Wabenkörper mit einer höheren Vorspannung in ein Mantelrohr eingebracht werden, als dies bei Blechen geringer Dicke, die einem Weichglühvorgang unterzogen wurden, der Fall ist. Durch die höhere Vorspannung können größere Kontaktkräfte zwischen den Hartblechen erreicht werden. Dies ist auch der Fall, wenn zwischen zwei benachbarte Hartbleche ein glattes Blech eingebracht wird.

Es ist bekannt, daß zur Ausbildung einer Struktur in einem Blech, das Blech in Form eines Wickels bereitgestellt wird und das Blech von dem Wickel über entsprechende Transportwalzen zu einer Kaltumformstation transportiert wird. Das Blech wickelt sich hierbei von dem Wickel ab. Während dieses Transportvorgangs zu der Kaltumformstation und von dieser weg unterliegt das Blech einer Zugbeanspruchung. Durch das erfindungsgemäße Verfahren zur Herstellung eines Wabenkörpers wird auch keine Reduzierung einer Streckung des Blechs beim Transport zur Kaltumformstation und von dieser weg erreicht. Dies ist auch der Fall während des Wickelns des Hartblechs.

Nach einer weiteren vorteilhaften Ausgestaltung des Verfahrens wird vorgeschlagen, daß ein Hartblech mit einer Dicke zwischen 50 µm und 80 µm, vorzugsweise zwischen ca. 60 µm und 80 µm, einer wenigstens zweistufigen Kaltumformung unterzogen wird. Durch diese Verfahrensvariante wird erreicht, daß die Werkzeuge zur Ausbildung einer Struktur, bei der es sich beispielsweise um eine Wellung handelt, die mittels entsprechender Wellwalzen in das Blech eingebracht wird, keiner übermäßigen Beanspruchung bzw. einem geringen Verschleiß ausgesetzt sind. Durch ein mehrstufiges Kaltumformverfahren wird auch erreicht, daß während des Kaltumformvorgangs des Hartblechs, dieses keiner übermäßigen Beanspruchung ausgesetzt wird, so daß eine Beschädigung oder Zerstörung des Hartblechs nicht eintritt.

Nach einer weiteren vorteilhaften Weiterbildung des Verfahrens wird vorgeschlagen, daß ein Hartblech von höchstens 50 µm, insbesondere von 35 µm, vorzugsweise von 20 µm, ohne ein vorheriges Weichglühen wenigstens teilweise einer Kaltumformung unterzogen wird. Das Hartblech, das eine Dicke von höchstens 50 µm aufweist wird durch die Kaltumformung mit einer Struktur versehen, wobei die Struktur in einem einstufigen Kaltumformvorgang ausgebildet wird. Die Kaltumformung erfolgt hierbei mittels entsprechender Werkzeuge, die ein Werkzeugprofil aufweisen, welches auch an die Dicke des Blechs angepaßt ist.

Zur Vereinfachung der Herstellung eines Wabenkörpers, bei dem es sich beispielsweise um einen S-förmig gewickelten Wabenkörper handelt, wird vorgeschlagen, daß das Hartblech nach der Kaltumformung in Abschnitte zerteilt wird und die Abschnitte geschichtet und gewickelt werden. Insbesondere wird ein Verfahren zur Herstellung des Wabenkörpers vorgeschlagen, bei dem zwischen zwei benachbarten wenigstens teilweise strukturierten Blechen wenigstens ein glattes Blech angeordnet wird.

Nach einem weiteren erfindungsgemäßen Gedanken wird ein Wabenkörper-Halbfabrikat vorgeschlagen. Das Wabenkärper-Halbfabrikat umfaßt wenigstens ein zumindest teilweise strukturiertes Hartblech. Die Struktur des Hartblechs ist - durch einen Kaltumformvorgang hergestellt, wobei vor dem Kaltumformvorgang kein Weichglühen des Hartblechs erfolgt. Das Hartblech weist eine Dicke von höchstens 80 µm auf. Das wenigstens teilweise strukturierte Blech ist geschichtet und gewickelt oder gewickelt. Das Hatblech weist wenigstens einen der folgenden Parameter auf: eine Streckgrenze R_{p0,2}, die größer ist als 950 N/mm²; eine Zugfestigkeit Rₘ, die zwischen 900 und 1250 N/mm² liegt; eine Bruchdehnung bei ca. 1 %; eine Erichsontiefung bei ca. 1mm. Eine solches Wabenkörper-Halbfabrikat ist insbesondere zur Ausbildung eines Abgaskatalysators geeignet. Dieses Halbfabrikat kann in weiteren Herstellungsschritten fortgebildet weiden. Insbesondere kann es nach einer Belotung einem Lötvorgang unterzogen werden. Während des Lötvorgangs kann auch ein Weichglühen des Hartbleches stattfinden, so daß mögliche Inhomogenitäten des Bleches durch den eigentlichen Lötvorgang behoben werden können.

Dadurch, daß das Hartblech ohne ein vorheriges Weichglühen einer Kaltumformung unterzogen wird, kann ein Wabenkörper-Halbfabrikat wirtschaftlicher hergestellt werden. Insbesondere entfällt bei dem Hartblech der mit einem hohen Energieaufwand durchgeführte Weichglühvorgang.

Nach einer vorteilhaften Ausgestaltung des Wabeakörper-Haibfabrikats wird vorgeschlagen, daß wenigstens ein Hartblech eine Dicke zwischen 50 µm und 80 µm, vorzugsweise zwischen ca. 60 µm und 80 µm aufweist, wobei die Struktur durch wenigstens eine zweistufige Kaltumformung gebildet wurde. Bei einem Hartblech, welches eine Dicke von höchstens 50 µm, insbesondere von 35 µm, vorzugsweise von 20 µm, aufweist, kann der Kaltumformvorgang einstufig ausgebildet sein, so daß die Struktur in einem einzigen Kaltumformschritt in das Hartblech eingebracht wird. Durch das Hartblech wird ein Wabenkörper-Halbfabrikat bereitgestellt, welches reproduzierbare Kanaiquerxhnittsgrößen und - formen aufweist, da während der Herstellung des Wabenkörper-Halbfabrikats die Struktur des Hartblechs aufgrund der Materialeigenschaften des Hartblechs erhalten bleiben.

Nach einer vorteilhaften Weiterbildung des Wabenkörper-Halbfabrikates wird vorgeschlagen, daß zwischen zwei benachbarten, wenigstens teilweise strukturierten Blechen wenigstens ein glattes-Blech angeordnet ist.

Insbesondere wird ein Hartblech, das eine Dicke von höchstens 80 µm aufweist und das keiner Weicbglühbehandlung unterzogen wurde, zur Ausbildung eines Wabenkörpers vorgeschlagen. Ein solches Blech weist eine ausreichende Festigkeit auf, durch die sichergestellt ist, daß bei Ausbildung von Strukturen in dem Blech, diese beim Wickeln des Blechs, z. B. zu einem spiralförmigen Wabenkörper, nicht zerstört werden. Durch die Verwendung des Hartblechs wird auch erreicht, daB während der Herstellung des Wabenkörpers eine Streckung des Hartblechs beim Transport zur Kaltutnformstation sowie beim Wickeln eintritt. Dies hat den Vorteil, daß das Hartblech vor der Kaltumformung nicht so stark gestreckt wurde, daß es durch die Kaltumformung zur Rißbildung innerhalb des Hartblechs kommt. Die Vermeidung einer Streckung während eines Wickelvorgangs des Hartblechs hat auch den Vorteil, daß die in das Hartblech eingebrachte Struktur erhalten bleibt, so daß eine deutlich geringere Varianz der Zelldichte bei einem Wabenkörper aus dem erfindungsgemäßen Hartblech eintritt, so daß mittels des Hartblechs die Qualität der aus diesem Hartblech hergestellten Wabenkörper gleichbleibend ist. Insbesondere kann durch das Hartblech auch die Lötqualität verbessert werden, da zwischen den Strukturen des Hartblechs und einer glatten Blechlage höhere Kontaktkräfte durch entsprechende Vorspannung während des Einbringens des Wabenkörpers in ein Mantelrohr erzeugt werden können.

Vorzugsweise hat das Hartblech eine Dicke zwischen 20 µm und 80 µm.

Insbesondere wird vorgeschlagen, daß ein Hartblech mit einer Dicke von ca. 25 µm zur Ausbildung eines Wabenkörpers verwendet wird.

Es wird auch ein wenigstens teilweise strukturiertes Blech zur Ausbildung eines Wabenkörpers vorgeschlagen, wobei das Blech eine Dicke von höchstens 80 µm aufweist. Das Blech ist keiner Weichglühbehandlung unterzogen worden.

Die Struktur des Blechs kann entsprechend den an und für sich bekannten Strukturen bei herkömmlichen Wabenkörpern entsprechen. Insbesondere kann es sich bei der Struktur um eine wellenförmige Struktur handeln.

In der Zeichnung sind Vorderansichten jeweils eines Wabenkörpers dargestellt.
- Fig. 1: zeigt einen Ausschnitt eines Wabenkörpers, der ein spiralig gewikeltes Weichblech aufweist;
- Fig. 2: zeigt einen Ausschnitt eines Wabenkörpers, der ein spiralig gewikeltes Hartblech aufweist.

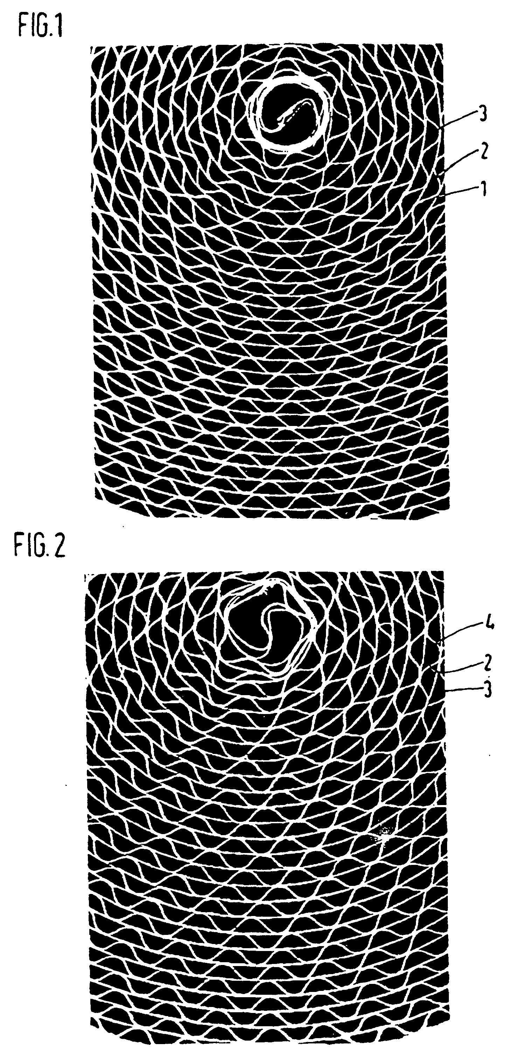

In der Fig. 1 ist ein Ausschnitt eines Wabenkörpers dargestellt. Der Wabenkörper ist spiralig gewickelt. Er urnfaßt ein gewelltes Weichblech 1 sowie ein glattes Blech 2. Das gewellte Weichblech 1 und glatte Blech 2 begrenzen Strömungskanäle 3, die sich im wesentlichen in axialer Richtung des Wabenkörpers erstrecken.

Das Weichblech 1 weist eine Streckgrenze R_{p0.2} auf, die kleiner als 600 N/mm² ist. Die Zugfestigkeit Rₘ ist größer als 550 N/mm². Das Weichblech 1 weist eine Bruchdehnung auf, die größer als 15 % ist. Die Erichsontiefung des Weichblechs 1 ist größer als 3 mm.

Fig. 2 zeigt einen Ausschnitt eines Wabenkörpers. Der Wabenkörper ist gebildet durch ein gewelltes Hartblech 4, welches gemeinsam mit einem Glattblech 2 spiralig gewikelt ist. Das Glattblech 2 sowie das Hartblech 4 begrenzen Strömungskanale 3, die sich in axialer Richtung des Wabenkörpers erstrecken.

Die Wellung des Hartblechs 4 sowie die Wellung des Weichblechs 1 ist in der gleichen Weise und mit Werkzeugen gleicher Geometrie hergestellt worden. Ebenso wie das Weichblech 1 ist das Hartblech 4 mit dem Glattblech 2 spiralig gewickelt worden. Aus dem Vergleich der Querschnittsgeometrie der Strömungskanäle 3 bei dem Wabenkörper nach Fig. 1 bzw. nach Fig. 2 ist ersichtlich, das insbesondere der Abstand benachbarter Lagen des Glattblechs 2 bei dem Wabenkörper, der mit einem Hartblech 4 hergestellt wurde, größer ist als die Abstände zwischen beabstandeten Lagen des Glattblechs 2 bei dem Wabenkörper, der mit einem Weichblech 1 hergestellt wurde. Mit anderen Worten, während des Herstellungsvorgangs des Wabenkörpers mit einem Weichblech 1 fand eine Veränderung der Geometrie der Wellung des Weichblechs 1 statt. Eine solche Veränderung der Geometrie der Wellung fand bei dem Hartblech 4 nicht statt.

## Patentansprüche

1. Verfahren zum Herstellen eines Wabenkörpers, insbesondere für einen Abgaskatalysator, **dadurch gekennzeichnet, daß** wenigstens ein Hartblech, das eine Dicke von höchstens 80 µm aufweist, einem Kaltumformvorgang ohne ein vorheriges Weichglühen unterzogen wird, durch den in das Hartblech wenigstens teilweise eine Struktur eingebracht und das wenigstens teilweise strukturierte Hartblech geschichtet und gewickelt oder gewickelt wird, wobei das Hartblech wenigstens einen der folgenden Parameter aufweist:
- eine Streckgrenze R_{p0,2} größer 950 N/mm²;
- eine Zugfestigkeit Rₘ zwischen 900 und 1250 N/mm²;
- eine Bruchdehnung von ca. 1 %;
- eine Erichsontiefung von ca. 1 mm.

2. Verfahren nach Anspruch 1, **dadurch gekennzeichnet, daß** ein Hartblech mit einer Dicke zwischen 50 µm und 80 µm, vorzugsweise zwischen ca. 60 µm und 80 µm, einer wenigstens zweistufigen Kaltumformung unterzogen wird.

3. Verfahren nach Anspruch 1, **dadurch gekennzeichnet, daß** wenigstens ein Hartblech mit einer Dicke von höchstens 50 µm, insbesondere von 35 µm, vorzugsweise von 20 µm, ohne ein vorheriges Weichglühen wenigstens teilweise einer Kaltumformung unterzogen wird.

4. Verfahren nach Anspruch 1, 2 oder 3, **dadurch gekennzeichnet, daß** das Hartblech in Abschnitte zerteilt wird, wobei die Abschnitte geschichtet und gewickelt werden.

5. Verfahren nach einem der Ansprüche 1 bis 4, **dadurch gekennzeichnet, daß** zwischen zwei benachbarten wenigstens teilweise strukturierten Hartblechen wenigstens ein glattes Blech angeordnet wird.

6. Wabenkörper-Halbfabrikat, **dadurch gekennzeichnet, daß** dieser wenigstens ein zumindest teilweise strukturiertes Hartblech umfaßt, dessen Struktur durch eine Kaltumformung ohne ein vorheriges Weichglühen ausgebildet wurde, und das Hartblech eine Dicke von höchstens 80 µm, aufweist, wobei das wenigstens teilweise strukturierte Hartblech geschichtet und gewickelt oder gewickelt in einem Mantelrohr angeordnet ist und weiterhin das Hartblech wenigstens einen der folgenden Parameter aufweist:
- eine Streckgrenze R_{p0,2} größer 950 N/mm²;
- eine Zugfestigkeit Rₘ zwischen 900 und 1250 N/mm²;
- eine Bruchdehnung von ca. 1 %;
- eine Erichsontiefung von ca. 1 mm.

7. Wabenkörper-Halbfabrikat nach Anspruch 6, **dadurch gekennzeichnet, daß** wenigstens ein Hartblech eine Dicke zwischen 50 µm und 80 µm, vorzugsweise zwischen ca. 60 µm und 80 µm, aufweist, wobei die Struktur durch wenigstens eine zweistufige Kaltumformung gebildet wurde.

8. Wabenkörper-Halbfabrikat nach Anspruch 6, **dadurch gekennzeichnet, daß** wenigstens ein Hartblech eine Dicke von höchstens 50 µm, insbesondere von 35 µm, vorzugsweise von 20 µm, aufweist, wobei das Hartblech ohne ein vorheriges Weichglühen wenigstens teilweise einer Kaltumformung unterzogen wurde.

9. Wabenkörper-Halbfabrikat nach Anspruch 6, 7 oder 8, **dadurch gekennzeichnet, daß** zwischen zwei benachbarten wenigstens teilweise strukturierten Hartblechen wenigstens ein glattes Blech angeordnet ist.

## Claims

1. A process for the production of a honeycomb body, in particular for an exhaust gas catalytic converter, **characterized in that** at least one hard metal sheet having a thickness of at most 80 µm is subjected without a previous soft-annealing operation to a cold shaping operation by which a structure is at least partially produced in the hard metal sheet and the at least partially structured hard metal sheet is layered and wound or wound when the hard metal sheet has at least one of the following parameters:
- an elastic limit R_{p0.2} of greater than 950 N/mm²;
- a tensile strength Rₘ of between 900 and 1.250 N/mm²;
- an elongation at fracture of about 1 %;
- an Erichson cupping of about 1 mm.

2. A process according to claim 1, **characterized in that** a hard metal sheet having a thickness between 50 µm and 80 µm, preferably between ca. 60 µm and 80 µm, is subjected to an at least two-stage cold shaping operation.

3. A process according to claim 1, **characterized in that** the at least one hard metal sheet having a thickness of at most 50 µm, in particular of 35 µm, preferably of 20 µm, is at least partially subjected to a cold shaping operation without a previous soft-annealing operation.

4. A process according to claim 1, 2 or 3, **characterized in that** the hard metal sheet is divided into portions that portions being layered and wound.

5. Process according to one of claims 1 to 4, **characterized in that** between two adjacent, at least partially structured hard metal sheets, at least one smooth metal sheet is arranged.

6. A semimanufactured honeycomb body product, **characterized in that** that product comprises at least one at least partially structured hard metal sheet whose structure was formed by a cold shaping operation without a previous soft-annealing operation and that the hard metal sheet has a thickness of at most 80 µm, wherein the at least partially structured hard metal sheet is arranged in a tubular casing in a layered and wound configuration or a wound configuration and wherein the hard sheet metal has at least one of the following parameters:
- an elastic limit R_{p0.2} of greater than 950 N/mm²;
- a tensile strength Rₘ of between 900 and 1.250 N/mm²;
- an elongation at fracture of about 1 %;
- an Erichson cupping of about 1 mm.

7. Product according to claim 6, **characterized in that** the at least one hard metal sheet is of a thickness between 50 µm and 80 µm, preferably between about 60 µm and 80 µm, wherein the structure is formed by a cold shaping operation having at least two stages.

8. Product according to claim 6, **characterized in that** at least one hard metal sheet is of a thickness of at most 50 µm, in particular of 35 µm, preferably of 20 µm, wherein the hard metal sheet was at least partially subjected to a cold shaping operation without a previous soft-annealing operation.

9. Product according to claim 6, 7 or 8, **characterized in that** at least one smooth metal sheet is arranged between two adjacent, at least partially structured hard metal sheets.

## Revendications

1. Procédé pour fabriquer un corps en nids d'abeilles, notamment pour un catalyseur de gaz d'échappement, **caractérisé en ce qu'**au moins une tôle dure, qui a une épaisseur de tout au plus 80 µm, est soumise à un processus de façonnage à froid sans recuit d'adoucissement préalable, processus de façonnage à froid par lequel une structure est introduite au moins partiellement dans la tôle dure et que la tôle dure au moins partiellement structurée est empilée et enroulée ou enroulée, la tôle dure présentant au moins un des paramètres suivants :
- une limite élastique R_{p0.2} plus grande que 950 N/mm²;
- une résistance à la traction Rₘ entre 900 et 1.250 N/mm²
- un allongement de rupture d'environ 1 % ;
- emboutissage d'Erichsen d'environ 1 mm.

2. Procédé selon la revendication 1, **caractérisé en ce qu'**une tôle dure avec une épaisseur entre 50 µm et 80 µm, de préférence entre environ 60 µm et 80 µm, est soumise à un processus de façonnage à froid en deux étapes.

3. Procédé selon la revendication 1, **caractérisé en ce qu'**au moins une tôle dure avec une épaisseur de tout au plus 50 µm, notamment de 35 µm, de préférence de 20 µm est soumise au moins partiellement à un façonnage à froid sans recuit d'adoucissement préalable.

4. Procédé selon la revendication 1, 2 ou 3, **caractérisé en ce que** la tôle dure est divisée en sections, les sections étant empilées et enroulées.

5. Procédé selon l'une des revendications 1 à 4, **caractérisé en ce qu'**au moins une tôle lisse est agencée entre deux tôles dures adjacentes, au moins partiellement structurées.

6. Semi-produit de corps en nids d'abeilles, **caractérisé en ce que** celui-ci comprend au moins une tôle dure au moins partiellement structurée, dont la structure a été réalisée par un façonnage à froid sans recuit d'adoucissement préalable et que la tôle dure a une épaisseur de tout au plus 80 µm, dans quel cas la tôle dure au moins partiellement structurée est agencée dans un tube d'enveloppe de manière à être empilée et enroulée ou enroulée et la tôle dure présente en outre au moins un des paramètres suivants :
- une limite élastique R_{p0.2} plus grande que 950 N/mm²;
- une résistance à la traction Rₘ entre 900 et 1.250 N/mm²
- un allongement de rupture d'environ 1 % ;
- emboutissage d'Erichsen d'environ 1 mm.

7. Semi-produit de corps en nids d'abeilles selon la revendication 6, **caractérisé en ce qu'**au moins une tôle dure a une épaisseur entre 50 µm et 80 µm, de préférence entre environ 60 µm et 80 µm, la structure étant réalisée par au moins un façonnage à froid en deux étapes.

8. Semi-produit de corps en nids d'abeilles selon la revendication 6, **caractérisé en ce qu'**au moins une tôle dure a une épaisseur de tout au plus 50 µm, notamment de 35 µm, de préférence de 20 µm, la tôle dure ayant été soumise au moins partiellement à un façonnage à froid sans recuit d'adoucissement préalable.

9. Semi-produit de corps en nids d'abeilles selon la revendication 6, 7 ou 8, **caractérisé en ce qu'**au moins une tôle lisse est agencée entre deux tôles dures adjacentes, au moins partiellement structurées.
